(19) Europäisches Patentamt
European Patent Office
Office européen des brevets

(11) **EP 1 644 296 B1**

(12) **FASCICULE DE BREVET EUROPEEN**

(45) Date de publication et mention de la délivrance du brevet:
**14.08.2019 Bulletin 2019/33**

(51) Int Cl.:
***C03C 17/36*** *(2006.01)*

(21) Numéro de dépôt: **04767469.2**

(22) Date de dépôt: **25.06.2004**

(86) Numéro de dépôt international:
**PCT/FR2004/001621**

(87) Numéro de publication internationale:
**WO 2005/000578 (06.01.2005 Gazette 2005/01)**

(54) **SUBSTRAT TRANSPARENT MUNI D UN REVETEMENT AVEC PROPRIETES DE RESISTANCE MECANIQUE**

TRANSPARENTES SUBSTRAT MIT EINER BESCHICHTUNG MIT MECHANISCHEN FESTIGKEITSEIGENSCHAFTEN

TRANSPARENT SUBSTRATE COMPRISING A COATING WITH MECHANICAL STRENGTH PROPERTIES

(84) Etats contractants désignés:
**AT BE BG CH CY CZ DE DK EE ES FI FR GB GR HU IE IT LI LU MC NL PL PT RO SE SI SK TR**

(30) Priorité: **26.06.2003 FR 0307750**

(43) Date de publication de la demande:
**12.04.2006 Bulletin 2006/15**

(73) Titulaire: **SAINT-GOBAIN GLASS FRANCE**
**92400 Courbevoie (FR)**

(72) Inventeurs:
• **SCHICHT, Heinz**
**D-04860 Torgau (DE)**
• **COUSTET , Valérie**
**F-93303 Aubervilliers (FR)**
• **NADAUD, Nicolas**
**F-93303 Aubervilliers (FR)**
• **BELLIOT, Sylvain**
**F-93303 Aubervilliers (FR)**

(74) Mandataire: **Saint-Gobain Recherche**
**Département Propriété Industrielle**
**39 Quai Lucien Lefranc**
**93300 Aubervilliers (FR)**

(56) Documents cités:
| | |
|---|---|
| **EP-A2- 0 796 825** | **WO-A-01/05723** |
| **WO-A-95/13189** | **WO-A2-03/048061** |
| **FR-A- 2 766 174** | **US-A- 5 296 302** |
| **US-A- 5 302 449** | **US-A- 5 834 103** |
| **US-B1- 6 355 334** | **US-B1- 6 432 545** |

Remarques:
Le dossier contient des informations techniques présentées postérieurement au dépôt de la demande et ne figurant pas dans le présent fascicule.

EP 1 644 296 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se rapporte au domaine des substrats transparents revêtus de couches à effet optique et/ou à effet sur le rayonnement énergétique.

Plus particulièrement, l'invention a trait à des empilements comprenant une couche à base de nitrure de silicium à propriété anti-reflet et participant éventuellement à la protection de couches sous-jacentes contre des détériorations consécutives à un traitement thermique et au procédé de transformation du substrat à couches.

On connaît des empilements de couches sur substrat verrier, comprenant une couche fonctionnelle notamment métallique, telle qu'en argent, auxquels une ou des couches à base de nitrure, notamment de nitrure de silicium ou d'aluminium ou d'un mélange des deux, confèrent une résistance élevée à un traitement thermique de type trempe, bombage ou assemblage d'un vitrage feuilleté. On peut citer les documents EP 718 250, EP 847 965 et EP 995 715 qui décrivent des empilements utilisant une couche fonctionnelle métallique, du type argent, ou le document WO-01/21540 qui décrit des empilements utilisant une couche fonctionnelle à base d'un autre métal ou de nitrure métallique.

Le nitrure de silicium apparaît comme un matériau de choix pour constituer une couche de protection contre les espèces corrosives rencontrées lors d'un traitement thermique, et conserver des propriétés optiques acceptables pour l'empilement après traitement.

Néanmoins, on peut encore rencontrer des défauts lorsque ces empilements sont soumis à une transformation avec traitement thermique en conditions industrielles. Il semblerait que ces défauts seraient dus, dans certains cas, à un défaut d'ordre physique de l'empilement, tel qu'une fissuration qui favoriserait la pénétration des espèces corrosives à l'intérieur de l'empilement de couches : même une fine rayure avant traitement thermique peut se transformer après traitement en un défaut de taille ou d'aspect rédhibitoire du fait du développement de la corrosion pendant le chauffage.

Le défaut de résistance à la rayure du nitrure de silicium, dû en partie, à un coefficient de frottement élevé est connu notamment du document WO-A-00/69784 qui propose d'y remédier en déposant le nitrure de silicium en présence de carbone afin de réaliser un revêtement mêlant nitrure de silicium et carbure de silicium dans une même couche.

Cette solution n'est toutefois pas pleinement satisfaisante dans la mesure où elle modifie les propriétés intrinsèques du matériau et pénalise notamment ses propriétés optiques.

Différents matériaux sont connus pour leur résistance mécanique et employés dans le domaine des substrats revêtus, comme couche supérieure ou couche de couverture avec une fonction de protection mécanique.

Les demandes de brevet EP 183 052 et EP 226 993 divulguent des empilements de couches transparents à faible émissivité, dans lesquels une couche métallique fonctionnelle, en particulier une couche mince d'argent, est disposée entre deux couches antireflet en matériau diélectrique qui sont le produit d'oxydation d'un alliage zinc/étain. Ces couches en diélectrique sont déposées par pulvérisation cathodique réactive assistée par champ magnétique, à l'aide d'un gaz réactif contenant de l'oxygène, à partir d'une cible métallique qui se compose d'un alliage Zn/Sn. La couche d'oxyde mixte renferme une quantité plus ou moins importante de stannate de zinc qui donne à la couche des propriétés particulièrement favorables, tout spécialement en termes de stabilité mécanique et chimique. Cependant la pulvérisation cathodique à partir de cibles en alliage ZnSn pose certaines difficultés techniques.

Selon le document WO-A-00/24686, la pulvérisation est facilitée du fait que la cible contient du zinc, de l'étain et au moins un élément supplémentaire parmi Al, Ga, In, B, Y, La, Ge, Si, P, As, Sb, Ce, Ti, Zr, Nb et Ta. On obtient aussi une amélioration considérable des propriétés de couche, notamment la durabilité chimique et mécanique, et de la qualité optique. Cette couche composite peut être utilisée en raison de sa durabilité chimique et mécanique notamment en tant que couche de couverture supérieure associée à au moins une couche d'oxyde contiguë sous-jacente ou sur-jacente.

Le document WO-99/05072 décrit un substrat verrier pourvu d'un empilement susceptible de subir un traitement thermique de type bombage et/ou trempe comportant une couche mince à base de [nitrure, carbonitrure, oxynitrure et/ou oxycarbonitrure] de silicium (ci-après désignée sous le terme de « couche de nitrure de silicium »). Cette couche est surmontée d'une couche protectrice vis-à-vis de la corrosion à haute température par des espèces du type $Na_2O$ chlorures ou sulfures, qui peut être une couche métallique ou d'oxyde métallique sous-stoechiométrique en oxygène destinée à s'oxyder totalement lors du traitement thermique avec des modifications de propriétés optiques importantes, ou bien une couche d'oxyde, oxycarbure et/ou oxynitrure métallique qui ne subit pas de transformation lors du traitement thermique sans modification de propriétés optiques. Le métal peut être choisi parmi Nb, Sn, Ta, Ti, Zr avec une préférence pour Nb.

En pratique, seule une couche finale de niobium est décrite et un traitement thermique de bombage et d'assemblage feuilleté s'accompagne d'une augmentation de la transmission lumineuse par oxydation du niobium avec formation d'un composé avec le sodium. Un inconvénient est la forte variation optique due au traitement thermique, ce qui complexifie et allonge les temps nécessaires à la mise au point et induit une augmentation des coûts de revient.

L'art antérieur connaît par ailleurs les demandes de brevet EP 530 676 et US 5 834 103.

L'art antérieur connaît par ailleurs la demande de brevet EP 530 676.

L'invention a pour but de fournir un substrat, en particulier pour vitrage, qui comporte un système de couches comprenant au moins une couche à base de nitrure de silicium au sens exposé ci-dessus et ayant des propriétés de résistance mécanique améliorées.

Le substrat selon l'invention est défini à la revendication 1. Les revendications dépendantes exposent des options avantageuses. Ce substrat, notamment verrier, est muni d'un revêtement comprenant au moins une couche c à base de :

- nitrure de silicium, carbonitrure de silicium, oxynitrure de silicium ou oxycarbonitrure de silicium ou
- nitrure aluminium, carbonitrure aluminium, oxynitrure aluminium ou oxycarbonitrure d'aluminium ou encore
- nitrure d'un mélange de silicium et d'aluminium, carbonitrure d'un mélange de silicium et d'aluminium, oxynitrure d'un mélange de silicium et d'aluminium ou oxycarbonitrure d'un mélange de silicium et d'aluminium,

cette couche c étant surmontée d'une couche de couverture qui est une couche de protection mécanique à base d'oxyde, cet oxyde étant éventuellement sous- ou sur-stoechiométrique en oxygène et/ou étant éventuellement nitruré.

Il est apparu que l'association d'une couche c dure de nitrure de silicium au sens de la présente invention avec une couche supérieure terminale d'oxyde permet d'atteindre une résistance mécanique remarquable, vraisemblablement parce que les propriétés lubrifiantes de l'oxyde limitent la rupture de l'empilement sous jacent en cas de sollicitation mécanique de la couche. Ceci se traduit par une résistance à la rayure en indentation et abrasion améliorée, ainsi qu'une résistance à la détérioration par cisaillement entre couches également améliorée.

Les oxydes sont en outre avantageux comme couches entrant dans la constitution d'un vitrage en raison de leur transparence et de leurs propriétés optiques en général qui ne changent pas l'optique du produit verrier.

La couche protectrice d'oxyde comprend avantageusement au moins un élément choisi parmi Ti, Zn, Sn, Al, Ga, In, B, Y, La, Ge, Si, P, As, Sb, Bi, Ce, Ti, Zr, Nb, Ta, Hf, de préférence parmi Ti, Zn, Sn et Zr.

La couche d'oxyde peut être à base d'un seul oxyde, d'un mélange d'oxydes ou être elle-même constituée de la superposition de plusieurs couches d'oxyde et/ou de plusieurs couches de mélange d'oxydes.

Les oxydes entrant dans la composition de la couche de couverture de protection mécanique, sont :

a) un oxyde de titane, éventuellement sous- ou sur-stoechiométrique en oxygène et nitruré, comprenant éventuellement un autre métal M tel que l'aluminium (composés de formule $TiM_pO_xN_y$ où p peu être nuls et x peut être inférieur, égal ou supérieur à 2),

Parmi les oxydes à base de titane, on utilise avantageusement $TiO_xN_y$ où $1 \leq x \leq 2$ et $0,5 \leq y \leq 1$.

L'oxyde de titane nitruré $TiO_xN_y$ s'est révélé supérieur à $TiO_2$ du point de vue de la résistance à la rayure.

Ces composés peuvent être déposés sur une couche de nitrure de silicium par pulvérisation cathodique à partir de cibles d'oxyde sous-stoechiométrique $TiO_x$ en atmosphère inerte, oxydante et/ou nitrurante, ou à partir de cibles de Ti en atmosphère oxydante et/ou nitrurante.

b) un oxyde mixte à base de zinc et d'un autre métal : à base de zinc et de titane ($ZnTiO_x$) ou de zinc et de zirconium ($ZnZrO_x$) ; éventuellement dopé par au moins un autre élément choisi parmi Al, Ga, In, B, Y, La, Ge, Si, P, As, Sb, Ce, Ti, Zr, Nb, Hf et Ta, cet oxyde étant éventuellement sous- ou sur-stoechiométrique en oxygène et/ou étant éventuellement nitruré.

De façon générale, des oxydes mixtes à structure de spinelle peuvent être utilisés avantageusement selon l'invention, tels que ceux du type $Zn_rTi_zAl_uO_x$.

On peut également utiliser pour constituer la couche de couverture de protection mécanique une superposition de couches des oxydes précités, telle que notamment un ensemble de couches $Zn_rZr_vO_x/TiO_2$.

La couche d'oxyde n'a pas besoin d'être très épaisse pour apporter la résistance à l'abrasion Ainsi, l'épaisseur de cette couche peut être de l'ordre de 15 nm ou moins, avantageusement de 10 nm ou moins.

La (ou les) couche(s) c de nitrure de silicium au sens de la présente invention peut (ou peuvent) renfermer en outre au moins un autre élément métallique tel que l'aluminium.

On observe l'amélioration de la résistance à la rayure même si l'épaisseur de la couche c est relativement forte. Ainsi, l'épaisseur de cette couche peut être de l'ordre de 5 à 60 nm, de préférence de 10 à 40 nm.

Selon une caractéristique, le revêtement comprend au moins une couche fonctionnelle, à base de métal.

Le système de couches protégé selon l'invention assure une fonction, contrôle solaire ou énergétique du type bas émissif utilisant au moins une couche fonctionnelle, notamment métallique, réfléchissant une partie du rayonnement du spectre solaire. La couche protectrice selon l'invention n'altère pas sensiblement les propriétés optiques du système ni sa résistance à la trempe ou au bombage.

Un tel système de couches protégé selon l'invention peut généralement comprendre la séquence de couche terminale diélectrique oxyde / nitrure de silicium / oxyde, notamment ZnO / $Si_3N_4$ / ZnO (où $Si_3N_4$ peut comprendre un élément additionnel tel que l'aluminium)-

Avantageusement, la couche fonctionnelle est à base d'argent et fait partie d'un empilement de couches pré-

sentant la séquence suivante : $Si_3N_4/ZnO/Ag/ZnO/Si_3N_4$ ou $Si_3N_4/ZnO/Ag/Si_3N_4/ZnO/Ag/ZnO/Si_3N_4$. Une couche métallique « bloqueur » telle qu'en Ti ou NiCr peut de plus être insérée au contact d'au moins une des couches fonctionnelles d'argent, en dessus et/ou en dessous de ces dernières.

L'invention est en particulier adaptée pour protéger un système de couches destiné à subir un traitement thermique tel qu'un bombage et/ou une trempe, mais aussi un assemblage feuilleté.

A cet égard, une couche de protection en oxyde de titane au moins partiellement nitrurée se révèle particulièrement avantageuse car elle ne provoque pas l'apparition de défauts optiques (piqûres, flou ...) dans l'empilement lors du traitement thermique, sans changer l'optique du produit après le traitement.

L'invention a également pour objet un vitrage selon la revendication 11 incorporant au moins un substrat tel que décrit précédemment, notamment dans une configuration de vitrage multiple ou feuilleté, un procédé selon la revendication 12 et une utilisation selon la revendication 13.

Les exemples suivants 2, 3 et 5 illustrent l'invention.

**Exemple 1**

Dans cet exemple, on évalue les propriétés protectrices d'une couche protectrice en oxyde de titane sur un système de couches à base d'argent de la structure suivante :
Verre/$Si_3N_4$:Al/ZnO:Al/Ti/Ag/ZnO:Al/$Si_3N_4$:Al/ZnO:Al/Ti/Ag/ZnO:Al/$Si_3N_4$:Al

$Si_3N_4$:Al signifie que le nitrure contient de l'aluminium. Il en est de même pour ZnO:Al qui signifie que l'oxyde contient de l'aluminium.

Le tableau suivant récapitule les épaisseurs indiquées en nanomètres pour chacune des couches :

|  | Epaisseur |
|---|---|
| $Si_3N_4$:Al | 22 nm |
| ZnO:Al | 8 nm |
| Ti | 0,5 nm |
| Ag | 8,7 nm |
| ZnO:Al | 6 nm |
| $Si_3N_4$:Al | 60 nm |
| ZnO:Al | 10 nm |
| Ti | 0,5 nm |
| Ag | 10 nm |
| ZnO:Al | 5 nm |
| $Si_3N_4$:Al | 25 nm |

Cet empilement est réalisé par une technique connue de pulvérisation cathodique sur le substrat qui défile dans une enceinte de pulvérisation devant des cathodes respectivement en Si dopé à l'aluminium dans une atmosphère contenant de l'azote, puis de Zn dopé à l'aluminium dans une atmosphère contenant de l'oxygène, puis de titane et d'argent dans une atmosphère inerte, à nouveau de Zn dans une atmosphère contenant de l'oxygène, et on répète la séquence pour enfin défiler devant une cible de Si dans une atmosphère contenant de l'azote.

La couche protectrice en $TiO_2$ est déposée sur le nitrure de silicium à partir d'une cathode en oxyde de titane sous stœchiométrique $TiO_x$ dans une atmosphère contenant de l'oxygène qui assure la conversion en oxyde stoechiométrique. Les conditions sont choisies pour que l'épaisseur de $TiO_2$ soit de 1 nm.

On compare les propriétés de l'empilement avec un empilement de référence de la structure indiquée ci-dessus dans les tests suivants :

- Lavage en machine à laver (selon ASTM 2486) : on observe les altérations de l'empilement de couches sous forme de délamination au niveau de la couche d'argent se propageant par cloquage. Ce test est représentatif de la résistance au cisaillement du système de couches déposé sur le substrat.
- Résistance à la rayure ERICHSEN : on déplace une pointe Bosch en acier de forme cylindrique à bout hémisphérique de diamètre 0,75 mm chargée d'un poids sur le substrat à une vitesse donnée. On note le nombre de tours nécessaires à la pointe pour rayer visiblement l'empilement.

Les résultats sont rassemblés dans le tableau 1 suivant.

Tableau 1

|  |  | Référence pas de protection | Ex 1 Protection TiO$_2$ 1nm |
|---|---|---|---|
| Machine à laver |  | Couches très dégradées | couches peu dégradées |
| ERICHSEN | charge 0,2 N | 1 tour | 9 tours |
|  | charge 0,5 N | 1 tour | 3 tours |

Ces résultats montrent que la surcouche de TiO$_2$ améliore très nettement la résistance à la rayure de l'empilement, ainsi que sa résistance au cisaillement interne. On attribue cela à un effet de lubrification du nitrure de silicium par l'oxyde de titane.

Un résultat similaire est obtenu avec une surcouche déposée à partir d'une cible métallique de titane en atmosphère oxydante.

**Exemple 2**

Cet exemple concerne la protection de l'empilement décrit à l'exemple 1 mais avec une couche d'oxyde de titane nitruré TiO$_x$N$_y$.

Comme à l'exemple 1, la couche protectrice est déposée sur le nitrure de silicium à partir d'une cathode en oxyde de titane sous stoechiométrique TiO$_x$ dans une atmosphère contenant de l'azote. Le cas échéant, le dépôt de cette dernière couche peut être effectué dans la même chambre, c'est-à-dire dans la même atmosphère, que le dépôt de nitrure de silicium.

On fait varier les conditions de dépôt pour que l'épaisseur de TiO$_x$N$_y$ varie de 1 à 3 nm.

On évalue la résistance de l'empilement par :

- le test de la machine à laver,
- le test Erichsen de résistance à la rayure par indentation, avec une pointe Bosch en acier de forme cylindrique à bout hémisphérique de diamètre 0,75 mm chargée d'un poids
- ainsi que par un test Taber de résistance à l'abrasion ; Dans ce dernier test, on soumet l'échantillon à un disque abrasif pendant un temps donné et on mesure en % la proportion de la surface du système de couches qui n'est pas arrachée.

Les résultats sont consignés dans le tableau 2 ci-après.

**Exemple 3**

Dans cet exemple, on évalue les propriétés protectrices d'une couche protectrice d'oxynitrure de titane TiO$_x$N$_y$ de type différent de celui de l'exemple 2 sur un système de couches à base d'argent de la structure explicitée à l'exemple 1 .

La différence par rapport à l'exemple 2 tient au fait que la couche protectrice est déposée par pulvérisation cathodique à partir d'une cible sous stoechiométrique de TiO$_x$ dans une atmosphère contenant de l'azote et de l'oxygène.

Les résultats sont consignés dans le tableau 2 ci-après.

Tableau 2

| Test |  | Référence -- | Ex 2 Protection TiO$_x$N$_y$ | | | Ex 3 Protection TiO$_2$:N | | |
|---|---|---|---|---|---|---|---|---|
|  |  |  | 1nm | 2nm | 3nm | 1 nm | 2nm | 3nm |
| Machine à laver* |  | 0 | 1 | 1 | 2 | 1 | 2 | 1 |
| TABER (%) |  | 66 | 63 | 69 | 76 | 79 | 78 | 77 |
| ERICHSEN (tours) | charge 0,2 N | 1 | 12 | 10 | 9 | 6 | 5 | 5 |
|  | charge 0,5 N | 1 | 3 | 5 | 4 | 3 | 3 | 2 |

| 0 = couches très dégradées | 1 = couches moyennement dégradées | 2 = couches peu dégradées |
|---|---|---|

Ces résultats montrent que les deux couches de protection des exemples 2 et 3 améliorent sensiblement la résistance à la rayure et au cisaillement des empilements.

**Exemple 4**

Dans cet exemple, on applique une couche protectrice selon l'invention sur un système de couches à base d'argent pour obtenir le structure suivante :
Verre /$Si_3N_4$/ZnO/Ti/Ag/ZnO/$Si_3N_4$/ZnO/Ti/Ag/ZnO/$Si_3N_4$/$TiO_2$.
Le substrat est en verre silico-sodo-calcique clair du type Planilux commercialisé par la société SAINT-GOBAIN GLASS.
Le tableau ci-après donne les valeurs en épaisseur des différentes couches minces de l'empilement :

|  | Epaisseur (nm) |
|---|---|
| $Si_3N_4$ | 20 |
| ZnO | 10 |
| Ti | 1,5 |
| Ag | 14 |
| ZnO | 10 |
| $Si_3N_4$ | 73 |
| ZnO | 10 |
| Ti | 1,5 |
| Ag | 14 |
| ZnO | 10 |
| $Si_3N_4$ | 22,5 |
| $TiO_2$ | 0,5 à 2 nm |

Dans cet exemple, on évalue les propriétés protectrices d'une couche protectrice en oxyde de titane nitruré $TiO_2$. La couche protectrice en $TiO_2$ est déposée sur le nitrure de silicium à partir d'une cathode en oxyde de titane sous stoechiométrique $TiO_x$ dans une atmosphère contenant de l'oxygène et de l'azote.
On fait varier les conditions de dépôt pour que l'épaisseur de $TiO_2$ varie de 0,5 à 2 nm. Dans tous les cas, et même lorsque l'atmosphère de dépôt contient de l'oxygène, il n'a pas été observé d'augmentation de l'absorption lumineuse de l'empilement supérieure à 0,5% par rapport à l'empilement de référence sans surcouche de protection.
On évalue la résistance à la rayure au moyen du test Erichsen, avec une pointe de type Van Laar en acier, à bout sphérique de 0,5 mm de diamètre. On évalue la charge nécessaire pour l'apparition d'une rayure visible à l'oeil.
En outre, le substrat est soumis à un traitement thermique à 620°C pendant 8 minutes, et l'on observe les évolutions optiques entre l'état non traité et l'état traité.
Les résultats sont consignés dans le tableau 3 ci-après.

**Exemple 5**

Dans cet exemple, on applique une couche protectrice selon l'invention sur un système de couches à base d'argent pour obtenir la structure suivante :
Verre /$Si_3N_4$/ZnO/Ti/Ag/ZnO/$Si_3N_4$/ZnO/Ti/Ag/ZnO/$Si_3N_4$ /$TiO_xN_y$.
Dans cet exemple, on évalue les propriétés protectrices d'une couche protectrice en oxyde de titane nitruré $TiO_xN_y$. La couche protectrice en $TiO_xN_y$ est déposée sur le nitrure de silicium à partir d'une cathode en oxyde de titane sous stoechiométrique $TiO_x$ dans une atmosphère contenant de l'azote.
On évalue comme à l'exemple 4 la résistance à la rayure au moyen du test Erichsen ainsi que les évolutions optiques à la trempe, et les résultats sont consignés dans le tableau 3 ci-après, où figurent aussi les résultats obtenus avec un produit de référence ne comprenant pas de couche d'oxyde superficielle.

Tableau 3

| Ex | Charge pour apparition de rayure | Evolutions optiques à la trempe |
|---|---|---|
| 4 | 1,6 N | Léger flou - Rouge |
| 5 | 3,5 N | Pas de variation de couleur |
| Référence | 0,3 N | Pas de variation de couleur |

Il apparaît que la couche de protection selon l'invention augmente considérablement la résistance à la rayure de l'empilement de couches.

D'autre part, les évolutions optiques des substrats de l'exemple 5 restent limitées et du même ordre que le produit de référence, avec une variation colorimétrique en transmission avant/après trempe : $\Delta E(T)$ autour de 3, une variation colorimétrique en réflexion extérieure avant/après trempe : $\Delta E(Rext)$ autour de 2,9, et une variation colorimétrique en réflexion intérieure avant/après trempe : $\Delta E(Rint)$ autour de 2,7. Le substrat de l'exemple 4 manifeste un léger flou rouge après chauffage du substrat.

Il est rappelé que d'une manière traditionnelle, une variation colorimétrique $\Delta E$ est exprimé de la façon suivante dans le système de colorimétrie L, a*, b* :

$$\Delta E = (\Delta L^{*2} + \Delta a^{*2} + \Delta b^{*2})^{\frac{1}{2}}.$$

Il est apparu que, pour les couches déposées dans une atmosphère ne contenant pas d'oxygène, la qualité optique après chauffage est bonne, sans apparition de défaut. Par contre, lorsque l'atmosphère de dépôt de la couche d'oxyde de titane contient de l'oxygène, alors il apparaît un léger défaut sous forme d'un flou coloré.

**Exemple 6**

Dans cet exemple, on évalue les propriétés protectrices d'une couche protectrice en oxyde de zirconium $ZrO_2$ dans le système de couches à base d'argent suivant :
Verre /$Si_3N_4$/ZnO/Ag/Ti/ZnO/$Si_3N_4$/$ZrO_2$ Le tableau suivant récapitule les épaisseurs indiquées en nanomètres pour chacune des couches :

| | Epaisseur |
|---|---|
| $Si_3N_4$ | 25 nm |
| ZnO | 10 nm |
| Ag | 8,7 nm |
| Ti | 0,5 nm |
| ZnO | 21 nm |
| $Si_3N_4$ | 21 nm |
| $ZrO_2$ | 4 nm |

On évalue comme à l'exemple 4 la résistance à la rayure au moyen du test Erichsen et à l'abrasion au moyen du test Taber, ainsi que les évolutions optiques à la trempe, et les résultats sont consignés dans le tableau 4 ci-après, où figurent aussi les résultats obtenus avec un produit de référence ne comprenant pas de couche d'oxyde superficielle.

Tableau 4

| Ex | Charge pour apparition de rayure | TABER (% couche non abrasée) | Evolutions optiques à la trempe | | |
|---|---|---|---|---|---|
| | | | $\Delta E(T)$ | $\Delta E(Rext)$ | $\Delta E(Rint)$ |
| 6 | 2 N | 77 | 1,0 | 2,3 | 3,5 |
| Réf. | 0,1 N | 63 | 0,9 | 1,7 | 2,4 |

On constate que la résistance à la rayure est considérablement augmentée avec la couche protectrice de $ZrO_2$, et la résistance à l'abrasion est également améliorée, alors que les évolutions optiques des substrats de l'exemple 6 restent limitées et du même ordre que le produit de référence.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat transparent, notamment du type verrier, qui comporte un revêtement ayant une fonction de contrôle solaire ou énergétique du type bas émissif utilisant au moins une couche fonctionnelle, métallique, réfléchissant une partie du rayonnement du spectre solaire et comprenant au moins une couche c à base de [nitrure, carbonitrure, oxynitrure ou oxycarbonitrure] de silicium ou d'aluminium ou d'un mélange des deux, surmontée d'une couche de couverture, **caractérisé en ce que** la couche de couverture est une couche de protection mécanique à base d'oxyde, cet oxyde étant éventuellement sous- ou sur-stoechiométrique en oxygène et/ou étant éventuellement nitruré, de telle sorte que ladite couche protectrice comprend :

   a) au moins un oxyde de titane nitruré, ou
   b) au moins un oxyde mixte à base de zinc et de titane ($ZnTiO_x$) ou de zinc et de zirconium ($ZnZrO_x$), ledit oxyde mixte étant éventuellement dopé par au moins un autre élément choisi parmi Al, Ga, In, B, Y, La, Ge, Si, P, As, Sb, Ce, Ti, Zr, Nb, Hf et Ta, cet oxyde mixte étant éventuellement sous- ou sur-stoechiométrique en oxygène et/ou étant éventuellement nitruré.

2. Substrat selon la revendication précédente, **caractérisé en ce que** ledit oxyde de titane comprend un autre métal M tel que l'aluminium.

3. Substrat selon la revendication 1 ou 2, **caractérisé en ce que** l'oxyde de titane est choisi parmi $TiO_xN_y$ où $1 \leq x \leq 2$ et $0,5 \leq y \leq 1$.

4. Substrat selon la revendication 1, **caractérisé en ce que** la couche de couverture de protection mécanique est constituée d'une superposition de couches d'oxydes : $Zn_rZr_vO_x/TiO_2$.

5. Substrat selon l'une quelconque des revendications précédentes, **caractérisé en ce que** la couche d'oxyde a une épaisseur de l'ordre de 15 nm ou moins, de préférence inférieure ou égale à 10 nm.

6. Substrat selon l'une quelconque des revendications précédentes, **caractérisé en ce que** la (ou les) couche(s) c peut (ou peuvent) renfermer en outre au moins un autre élément métallique tel que l'aluminium.

7. Substrat selon l'une quelconque des revendications précédentes, **caractérisé en ce que** la couche c a une épaisseur de l'ordre de 5 à 60 nm, de préférence de 10 à 40 nm.

8. Substrat selon l'une quelconque des revendications précédentes, **caractérisé en ce que** le revêtement comprend la séquence terminale diélectrique oxyde/nitrure de silicium/oxyde, notamment $ZnO/Si_3N_4/ZnO$.

9. Substrat selon l'une quelconque des revendications précédentes, **caractérisé en ce que** l'empilement de couches présente la séquence suivante:

   $Si_3N_4/ZnO/Ag/ZnO/Si_3N_4$/couche de couverture
   ou $Si_3N_4/ZnO/Ag/ZnO/Si_3N_4/ZnO/Ag/ZnO/Si_3N_4$/couche de couverture
   avec éventuellement une couche de blocage métallique au contact d'au moins une des couches d'argent.

10. Substrat selon l'une quelconque des revendications précédentes, **caractérisé en ce que** le revêtement conserve sensiblement ses propriétés notamment optiques après un traitement thermique.

11. Vitrage incorporant au moins un substrat selon l'une quelconque des revendications précédentes, notamment dans une configuration de vitrage multiple ou feuilleté.

**12.** Procédé pour améliorer la résistance mécanique d'un substrat transparent, notamment verrier, qui comporte un revêtement de couches ayant une fonction de contrôle solaire ou énergétique du type bas émissif utilisant au moins une couche fonctionnelle, métallique, réfléchissant une partie du rayonnement du spectre solaire et comprenant au moins une couche diélectrique c à base de [nitrure, carbonitrure, oxynitrure ou oxycarbonitrure] de silicium ou d'aluminium ou d'un mélange des deux, **caractérisé en ce que** l'on dépose sur au moins une couche diélectrique c une couche de couverture de protection mécanique à base d'oxyde, cet oxyde étant éventuellement sous-stoechiométrique en oxygène et/ou étant éventuellement nitruré, de telle sorte que ladite couche protectrice comprend :

a) au moins un oxyde de titane nitruré, ou
b) au moins un oxyde mixte à base de zinc et de titane ($ZnTiO_x$) ou de zinc et de zirconium ($ZnZrO_x$), ledit oxyde mixte étant éventuellement dopé par au moins un autre élément choisi parmi Al, Ga, In, B, Y, La, Ge, Si, P, As, Sb, Ce, Ti, Zr, Nb, Hf et Ta, cet oxyde mixte étant éventuellement sous- ou sur-stoechiométrique en oxygène et/ou étant éventuellement nitruré.

**13.** Utilisation comme couche de couverture de protection mécanique d'une couche de protection mécanique à base d'oxyde, cet oxyde étant éventuellement sous-stoechiométrique en oxygène et/ou étant éventuellement nitruré pour améliorer la résistance mécanique d'un substrat transparent, notamment verrier, qui comporte un revêtement de couches ayant une fonction de contrôle solaire ou énergétique du type bas émissif utilisant au moins une couche fonctionnelle, métallique, réfléchissant une partie du rayonnement du spectre solaire et comprenant au moins une couche c à base de [nitrure, carbonitrure, oxynitrure ou oxycarbonitrure] de silicium ou d'aluminium ou d'un mélange des deux, de telle sorte que ladite couche de couverture surmontant ladite couche c comprend :

a) au moins un oxyde de titane nitruré, ou
b) au moins un oxyde mixte à base de zinc et de titane ($ZnTiO_x$) ou de zinc et de zirconium ($ZnZrO_x$), ledit oxyde mixte étant éventuellement dopé par au moins un autre élément choisi parmi Al, Ga, In, B, Y, La, Ge, Si, P, As, Sb, Ce, Ti, Zr, Nb, Hf et Ta, cet oxyde mixte étant éventuellement sous- ou sur-stoechiométrique en oxygène et/ou étant éventuellement nitruré.

**14.** Utilisation selon la revendication 13, **caractérisée en ce que** la couche de couverture de protection mécanique est constituée d'une superposition de couches d'oxydes : $Zn_rZr_vO_x/TiO_2$.

**Patentansprüche**

**1.** Transparentes Substrat, insbesondere als Glas, das eine Beschichtung mit einer Sonnenschutzfunktion oder Low-e-Funktion unter Verwendung mindestens einer funktionellen, metallischen Schicht, die einen Teil der Strahlung des Sonnenspektrums reflektiert, umfasst und das mindestens eine Schicht c auf Basis von Silicium- oder Aluminium[-nitrid, -carbonitrid, -oxynitrid oder -oxycarbonitrid] oder von einem Gemisch der beiden umfasst, über der eine Deckschicht liegt, **dadurch gekennzeichnet, dass** die Deckschicht eine mechanische Schutzschicht auf Oxidbasis ist, wobei dieses Oxid gegebenenfalls unter- oder überstöchiometrischen Sauerstoff aufweist und/oder gegebenenfalls nitriert ist, sodass die Schutzschicht umfasst:

a) mindestens ein nitriertes Titanoxid oder
b) mindestens ein gemischtes Oxid auf Zink- und Titanbasis ($ZnTiO_x$) oder Zink- und Zirkoniumbasis ($ZnZrO_x$), wobei das gemischte Oxid gegebenenfalls mit mindestens einem weiteren, aus Al, Ga, In, B, Y, La, Ge, Si, P, As, Sb, Ce, Ti, Zr, Nb, Hf und Ta ausgewählten Element dotiert ist, wobei dieses gemischte Oxid gegebenenfalls unter- oder überstöchiometrischen Sauerstoff aufweist und/oder gegebenenfalls nitriert ist.

**2.** Substrat nach vorhergehendem Anspruch, **dadurch gekennzeichnet, dass** das Titanoxid ein weiteres Metall M wie Aluminium umfasst.

**3.** Substrat nach Anspruch 1 oder 2, **dadurch gekennzeichnet, dass** das Titanoxid aus $TiO_xN_y$ ausgewählt ist, wobei $1 \leq x \leq 2$ und $0,5 \leq y \leq 1$.

**4.** Substrat nach Anspruch 1, **dadurch gekennzeichnet, dass** die mechanische Schutzdeckschicht aus einer Übereinanderschichtung von Oxidschichten $Zn_rZr_vO_x/TiO_2$ besteht.

**5.** Substrat nach einem der vorhergehenden Ansprüche, **dadurch gekennzeichnet, dass** die Oxidschicht eine Stärke von circa 15 nm oder weniger, bevorzugt von weniger als oder gleich 10 nm, aufweist.

**6.** Substrat nach einem der vorhergehenden Ansprüche, **dadurch gekennzeichnet, dass** die Schicht(en) c außerdem mindestens ein weiteres metallisches Element wie Aluminium umfassen kann (können).

**7.** Substrat nach einem der vorhergehenden Ansprüche, **dadurch gekennzeichnet, dass** die Schicht c eine Stärke von circa 5 bis 60 nm, bevorzugt von 10 bis 40 nm, aufweist.

**8.** Substrat nach einem der vorhergehenden Ansprüche, **dadurch gekennzeichnet, dass** die Beschichtung die abschließende dielektrische Reihenfolge Oxid/Siliciumnitrid/Oxid, insbesondere $ZnO/Si_3N_4/ZnO$, umfasst.

**9.** Substrat nach einem der vorhergehenden Ansprüche, **dadurch gekennzeichnet, dass** der Schichtstapel folgende Reihenfolge aufweist:

$Si_3N_4/ZnO/Ag/ZnO/Si_3N_4/Deckschicht$
oder $Si_3N_4/ZnO/Ag/ZnO/Si_3N_4/ZnO/Ag/ZnO/Si_3N_4/Deckschicht$
mit gegebenenfalls einer metallischen Blockierungsschicht, die in Kontakt mit mindestens einer der Silberschichten steht.

**10.** Substrat nach einem der vorhergehenden Ansprüche, **dadurch gekennzeichnet, dass** die Beschichtung ihre insbesondere optischen Eigenschaften nach einer Wärmebehandlung im Wesentlichen beibehält.

**11.** Verglasung, die mindestens ein Substrat nach einem der vorhergehenden Ansprüche beinhaltet, insbesondere in einer Beschaffenheit als Mehrfach- oder Verbundverglasung.

**12.** Verfahren zur Verbesserung der mechanischen Festigkeit eines transparenten Substrats, insbesondere als Glas, das eine Beschichtung mit Schichten mit einer Sonnenschutzfunktion oder Low-e-Funktion unter Verwendung mindestens einer funktionellen, metallischen Schicht, die einen Teil der Strahlung des Sonnenspektrums reflektiert, umfasst und das mindestens eine dielektrische Schicht c auf Basis von Silicium- oder Aluminium[-nitrid, -carbonitrid, -oxynitrid oder -oxycarbonitrid] oder von einem Gemisch der beiden umfasst, **dadurch gekennzeichnet, dass** auf mindestens eine dielektrische Schicht c eine mechanische Schutzdeckschicht auf Oxidbasis aufgebracht wird, wobei dieses Oxid gegebenenfalls unterstöchiometrischen Sauerstoff aufweist und/oder gegebenenfalls nitriert ist, sodass die Schutzschicht umfasst:

a) mindestens ein nitriertes Titanoxid oder
b) mindestens ein gemischtes Oxid auf Zink- und Titanbasis ($ZnTiO_x$) oder Zink- und Zirkoniumbasis ($ZnZrO_x$), wobei das gemischte Oxid gegebenenfalls mit mindestens einem weiteren, aus Al, Ga, In, B, Y, La, Ge, Si, P, As, Sb, Ce, Ti, Zr, Nb, Hf und Ta ausgewählten Element dotiert ist, wobei dieses gemischte Oxid gegebenenfalls unter- oder überstöchiometrischen Sauerstoff aufweist und/oder gegebenenfalls nitriert ist.

**13.** Verwendung als mechanische Schutzdeckschicht einer mechanischen Schutzschicht auf Oxidbasis, wobei dieses Oxid gegebenenfalls unterstöchiometrischen Sauerstoff aufweist und/oder gegebenenfalls nitriert ist, um die mechanische Festigkeit eines transparenten Substrats, insbesondere Glassubstrats, zu verbessern, das eine Beschichtung mit Schichten mit einer Sonnenschutzfunktion oder Low-e-Funktion unter Verwendung mindestens einer funktionellen, metallischen Schicht, die einen Teil der Strahlung des Sonnenspektrums reflektiert, umfasst und die mindestens eine Schicht c auf Basis von Silicium- oder Aluminium[-nitrid, -carbonitrid, -oxynitrid oder -oxycarbonitrid] oder von einem Gemisch der beiden umfasst, sodass die Deckschicht, die über der Schicht c liegt, umfasst:

a) mindestens ein nitriertes Titanoxid oder
b) mindestens ein gemischtes Oxid auf Zink- und Titanbasis ($ZnTiO_x$) oder Zink- und Zirkoniumbasis ($ZnZrO_x$), wobei das gemischte Oxid gegebenenfalls mit mindestens einem weiteren, aus Al, Ga, In, B, Y, La, Ge, Si, P, As, Sb, Ce, Ti, Zr, Nb, Hf und Ta ausgewählten Element dotiert ist, wobei dieses gemischte Oxid gegebenenfalls unter- oder überstöchiometrischen Sauerstoff aufweist und/oder gegebenenfalls nitriert ist.

**14.** Verwendung nach Anspruch 13, **dadurch gekennzeichnet, dass** die mechanische Schutzdeckschicht aus einer Übereinanderschichtung von Oxidschichten $Zn_rZr_vO_x/TiO_2$ besteht.

**Claims**

1. A transparent substrate, especially of the glass type, which comprises a coating having a solar control function or energetic function of the low emissivity type using at least one metallic functional layer that reflects a part of the solar spectrum and that contains at least one layer c based on silicon or aluminum [nitride, carbonitride, oxynitride or oxycarbonitride] or on a mixture of the two, which is surmounted by a cover layer, **characterized in that** the cover layer is an oxide-based mechanical protection layer, this oxide being optionally oxygen-substoichiometric or oxygen-superstoichiometric and/or being optionally nitrided, such that said protective layer comprises:

   a) at least a nitrited titanium oxide, or
   b) at least a mixed oxide based on zinc and titanium ($ZnTiO_x$) or on zinc and zirconium ($ZnZrO_x$), said mixed oxide being eventually doped by at least one other element chosen from Al, Ga, In, B, Y, La, Ge, Si, P, As, Sb, Ce, Ti, Zr, Nb, Hf and Ta, this mixed oxide being optionally oxygen-substoichiometric or oxygen-superstoichiometric and/or being optionally nitrided.

2. The substrate as claimed in the preceding claim, **characterized in that** said titanium oxide contains another metal M, such as aluminum.

3. The substrate as claimed in claim 1 or 2, **characterized in that** the titanium oxide is chosen from $TiO_xN_y$ where $1 \leq x \leq 2$ and $0.5 \leq y \leq 1$.

4. The substrate as claimed in claim 1, **characterized in that** the mechanical protection cover layer is made up from a superposition of oxide layers: $Zn_rZr_vO_x/TiO_2$.

5. The substrate as claimed in any one of the preceding claims, **characterized in that** the oxide layer has a thickness of around 15 nm or less, preferably less than or equal to 10 nm.

6. The substrate as claimed in any one of the preceding claims, **characterized in that** the layer(s) c may furthermore contain at least one other metallic element such as aluminum.

7. The substrate as claimed in any one of the preceding claims, **characterized in that** the layer c has a thickness of around 5 to 60 nm, preferably from 10 to 40 nm.

8. The substrate as claimed in any one of the preceding claims, **characterized in that** the coating includes the dielectric final sequence: oxide/silicon nitride/oxide, especially $ZnO/Si_3N_4/ZnO$.

9. The substrate as claimed in any one of the preceding claims, **characterized in that** the multilayer has the following sequence:

   $Si_3N_4/ZnO/Ag/ZnO/Si_3N_4$/cover layer
   or $Si_3N_4/ZnO/Ag/ZnO/Si_3N_4/ZnO/Ag/ZnO/Si_3N_4$/cover layer optionally with a metal blocking layer in contact with at least one of the silver layers.

10. The substrate as claimed in any one of preceding claims, **characterized in that** the coating substantially preserves its properties, especially its optical properties, after a heat treatment.

11. A glazing assembly incorporating at least one substrate as claimed in any one of the preceding claims, especially in a multiple glazing or laminated glazing configuration.

12. A process for improving the mechanical resistance of a transparent substrate, especially a glass substrate, which comprises a multilayer coating having a solar control function or energetic function of the low emissivity type using at least one metallic functional layer that reflects a part of the solar spectrum and that includes at least one dielectric layer c based on a silicon or aluminum [nitride, carbonitride, oxynitride or oxycarbonitride] or on a mixture of the two, **characterized in that** a mechanical protection cover oxide-based layer is deposited on at least one dielectric layer c, this oxide optionally being oxygen-substoichiometric or oxygen-superstoichiometric and/or being optionally nitrided, such that said protective layer comprises:

   a) at least a nitrited titanium oxide, or

b) at least a mixed oxide based on zinc and titanium (ZnTiO$_x$) or on zinc and zirconium (ZnZrO$_x$), said mixed oxide being eventually doped by at least one other element chosen from Al, Ga, In, B, Y, La, Ge, Si, P, As, Sb, Ce, Ti, Zr, Nb, Hf and Ta, this mixed oxide being optionally oxygen-substoichiometric or oxygen-superstoichiometric and/or being optionally nitrided.

13. The use as a mechanical protection cover of an oxide-based protection layer, this oxide being optionally oxygen-substoichiometric and/or being optionally nitrided, in order to improve the mechanical resistance of a transparent substrate, especially a glass substrate, which comprises a multilayer coating having a solar control function or energetic function of the low emissivity type using at least one metallic functional layer that reflects a part of the solar spectrum and that includes at least one layer c based on a silicon or aluminum [nitride, carbonitride, oxynitride or oxycarbonitride] or on a mixture of the two, such that said protective layer surmounting said layer c comprises:

a) at least a nitrited titanium oxide, or
b) at least a mixed oxide based on zinc and titanium (ZnTiO$_x$) or on zinc and zirconium (ZnZrO$_x$), said mixed oxide being eventually doped by at least one other element chosen from Al, Ga, In, B, Y, La, Ge, Si, P, As, Sb, Ce, Ti, Zr, Nb, Hf and Ta, this mixed oxide being optionally oxygen-substoichiometric or oxygen-superstoichiometric and/or being optionally nitrided.

14. Use according to claim 13, **characterized in that** the mechanical protection cover layer is made up from a super-position of oxide layers: Zn$_r$Zr$_v$O$_x$/TiO$_2$.

EP 1 644 296 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 718250 A
- EP 847965 A
- EP 995715 A
- WO 0121540 A
- WO 0069784 A
- EP 183052 A
- EP 226993 A
- WO 0024686 A
- WO 9905072 A
- EP 530676 A
- US 5834103 A